# EUROPEAN PATENT APPLICATION

(11) **EP 4 794 023 A1**
(43) Date of publication of application: **19.08.2026**
(21) Application number: 26158060.9
(22) Date of filing: 12.02.2026
(51) Int. Cl.: H01M 4/36, H01M 4/62, H01M 4/48, H01M 10/0525, H01M 4/131

(54) **CATHODE ACTIVE MATERIAL FOR LITHIUM SECONDARY BATTERY**

(30) Priority: 18.02.2025 KR 20250021046
(71) Applicant: SK Innovation Co., Ltd., Seoul 03188 (KR); SK On Co., Ltd., Seoul 03161 (KR)
(72) Inventor: LEE, Ha Eun, 34124 Daejeon (KR); LEE, Tae Kyoung, 34124 Daejeon (KR); KIM, Sang Bok, 34124 Daejeon (KR); KIM, Sung Beom, 34124 Daejeon (KR); PARK, Sang Min, 34124 Daejeon (KR); CHOI, Jae Ho, 34124 Daejeon (KR)
(74) Representative: Prüfer & Partner mbB Patentanwälte · Rechtsanwälte

(57) **Abstract**

A cathode active material for a lithium secondary battery according to the present disclosure includes lithium-metal oxide particles and a coating part formed on the lithium-metal oxide particles and including a metal-containing part and a sulfur-containing part. A metal area ratio of the cathode active material according to a specific equation may fall within a predetermined range. Accordingly, side reactions between the cathode active material and the electrolyte may be suppressed, and the stability and cycle life characteristics of the secondary battery may be improved.

## Description

### [BACKGROUND OF THE INVENTION]

### 1. Field of the Invention

The present disclosure relates to a cathode active material for a lithium secondary battery.

### 2. Description of the Related Art

Secondary batteries are batteries that can be repeatedly charged and discharged. With the development of information, communication, and display industries, they have been widely applied as power sources for portable electronic communication devices such as camcorders, mobile phones, and laptop PCs. Examples of secondary batteries may include a lithium secondary battery, a nickel-cadmium battery, and a nickel-hydrogen battery. Among these, the lithium secondary battery has been actively developed and applied due to its high operating voltage, high energy density per unit weight, and advantages in charging speed and weight reduction.

The lithium secondary battery may include: an electrode assembly including a cathode, an anode, and a separator; and an electrolyte that impregnates the electrode assembly. In addition, the lithium secondary battery may further include, for example, a pouch-type outer case that accommodates the electrode assembly and the electrolyte.

The cathode may include a cathode current collector and a cathode active material layer formed on the cathode current collector and including a cathode active material. The electrical and cycle life characteristics of the secondary battery may deteriorate due to side reactions between the cathode active material and the electrolyte.

For example, a cathode active material including a metal oxide may release oxygen during a charging process of the secondary battery, and the released oxygen may react with the electrolyte to generate gas, thereby reducing the structural stability of the secondary battery. Alternatively, transition metals eluted from a transition-metal-containing cathode active material into the electrolyte may reduce the efficiency of electrochemical reactions between the electrodes in the electrolyte, thereby degrading the electrical characteristics of the secondary battery.

### [SUMMARY OF THE INVENTION]

An object of the present disclosure is to provide a cathode active material for a lithium secondary battery with improved stability.

Another object of the present disclosure is to provide a secondary battery with improved electrical and cycle life characteristics.

A cathode active material for a lithium secondary battery according to exemplary embodiments of the present disclosure includes: a lithium-metal oxide particle; and a coating part formed on the lithium-metal oxide particle and including a metal-containing part and a sulfur-containing part. A metal area ratio of the cathode active material according to Equation 1 below is 2% to 6%.$Metal area ratio = \left(Metal-containing part area/Total area\right) \times 100$

In Equation 1, the total area is a total area of the lithium-metal oxide particles and the coating part measured from the image obtained by the backscattered electron analysis, and the metal-containing part area is an area of the metal-containing part measured from the image obtained by the backscattered electron analysis.

According to exemplary embodiments, a sulfur area ratio of the cathode active material according to Equation 2 below may be 5% to 20%:

$Sulfur area ratio = \left(Sulfur-containing part area/Total area\right) \times 100$

In Equation 2, the total area is the total area of the lithium-metal oxide particles and the coating part measured from the image obtained by the backscattered electron analysis, and the sulfur-containing part area is an area of the sulfur-containing part measured from the image obtained by the backscattered electron analysis.

According to exemplary embodiments, the total area, the metal-containing part area, and the sulfur-containing part area may each be an average of the total areas, the metal-containing part areas, and the sulfur-containing part areas measured from respective images obtained by repeating the backscattered electron analysis 5 or more times.

According to exemplary embodiments, an accelerating voltage of an electron beam irradiated during the backscattered electron analysis may be 2 kV to 8 kV.

According to exemplary embodiments, the metal-containing part may include at least one of Al, Ti, Zr, W, Sr, Ba, Ta, Nb, Mo, K, B and Na.

According to exemplary embodiments, the lithium-metal oxide particles may have a median particle diameter (D50) of 3.0 µm to 20.0 µm.

According to exemplary embodiments, the lithium-metal oxide particle may include a secondary particle formed by agglomeration of a plurality of primary particles.

According to exemplary embodiments, the coating part may be formed between the primary particles and on a surface of the secondary particle.

According to exemplary embodiments, the content of the metal-containing part formed between the primary particles may be less than a content of the metal-containing part formed on the surface of the secondary particle.

According to exemplary embodiments, the content of the sulfur-containing part formed between the primary particles may be less than a content of the sulfur-containing part formed on the surface of the secondary particle.

According to exemplary embodiments, the cathode active material may further include a lithium compound formed on the lithium-metal oxide particle, wherein the content of the lithium compound based on the total weight of the cathode active material is 1,000 ppm to 5,500 ppm.

A lithium secondary battery according to exemplary embodiments of the present disclosure includes: a cathode including the above-described cathode active material for a lithium secondary battery; and an anode disposed opposite the cathode.

The cathode active material for a lithium secondary battery according to embodiments of the present disclosure may include a coating part formed on a lithium-metal oxide particle and including a metal-containing part and a sulfur-containing part. Accordingly, side reactions between the cathode active material and the electrolyte may be suppressed, and the stability and cycle life characteristics of the secondary battery may be improved.

The areas of the metal-containing part and the sulfur-containing part of the cathode active material for a lithium secondary battery according to exemplary embodiments may be adjusted within a predetermined range. Accordingly, an increase in resistance may be suppressed and residual lithium may be reduced. As a result the cycle life characteristics of the secondary battery may be further improved.

### [BRIEF DESCRIPTION OF THE DRAWINGS]

The above and other objects, features and advantages of the present disclosure will be more clearly understood from the following detailed description taken in conjunction with the accompanying drawings, in which:
FIG. 1 is a schematic view illustrating a cathode active material for a lithium secondary battery according to exemplary embodiments;
FIGS. 2 and 3 are schematic plan and cross-sectional views, respectively, illustrating a lithium secondary battery according to exemplary embodiments; and
FIGS. 4, 5 and 6A to 6C are images illustrating the results of backscattered electron analysis (BSE) of the cathode active material for a lithium secondary battery according to exemplary embodiments.

### [DETAILED DESCRIPTION OF THE INVENTION]

Embodiments of the present disclosure provide a cathode active material for a lithium secondary battery (hereinafter, also abbreviated as "cathode active material") with improved stability. In addition, a cathode for a lithium secondary battery (hereinafter, also abbreviated as "cathode") and a lithium secondary battery (hereinafter, also abbreviated as "secondary battery") including the cathode active material are provided.

Hereinafter, exemplary embodiments of the present disclosure will be described in detail with reference to the accompanying drawings. However, these embodiments are merely illustrative, and the present disclosure is not limited to the specific embodiments described as examples.

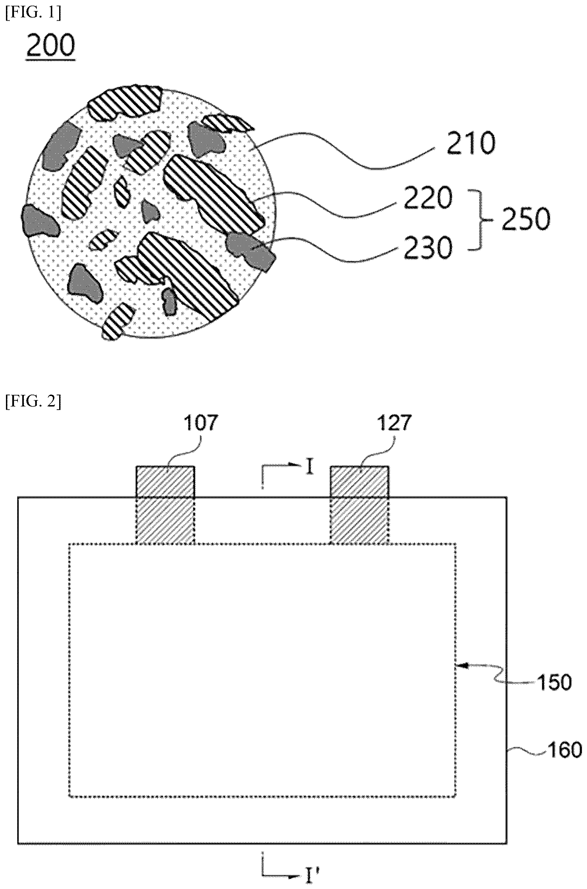

FIG. 1 is a schematic view illustrating a cathode active material for a lithium secondary battery according to exemplary embodiments.

Referring to FIG. 1, a cathode active material 200 may include a lithium-metal oxide particle 210 and a coating part 250 formed on the lithium-metal oxide particle 210. The coating part 250 may include a metal-containing part 220 and a sulfur-containing part 230.

The cathode active material 200 may include a compound capable of reversibly intercalating and deintercalating lithium ions. For example, the lithium-metal oxide particle 210 may reversibly intercalate and deintercalate lithium ions.

According to exemplary embodiments, the lithium-metal oxide particle 210 may include a transition metal. For example, the lithium-metal oxide particle 210 may include a lithium-nickel metal oxide. For example, the lithium-nickel metal oxide may further include at least one of cobalt (Co), manganese (Mn) and aluminum (Al).

In some embodiments, the lithium-nickel metal oxide may include a layered structure or a crystal structure represented by Formula 1 below.

[Formula 1] LiₓNiₐM_{b}O_{2+z}

In Formula 1, x, a, b and z may satisfy 0.9≤x≤1.2, 0.6≤a≤0.99, 0.01≤b≤0.4, and - 0.5≤z≤0.1. As described above, M may include Co, Mn and/or Al.

The chemical structure represented by Formula 1 indicates a bonding relationship among elements included in the layered structure or the crystal structure of the cathode active material 200, and does not exclude the presence of additional elements. For example, M includes Co and/or Mn, and Co and/or Mn may be provided as main active elements of the cathode active material 200 together with Ni. Here, it should be understood that Formula 1 is provided to express the bonding relationship between the main active elements, and is a formula encompassing the introduction and substitution of additional elements.

In one embodiment, the cathode active material 200 may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element that contributes to the capacity/output activity of the cathode active material 200 together with Co or Mn, such as Al.

For example, the lithium-nickel metal oxide may include a layered structure or a crystal structure represented by Formula 1-1 below.

[Formula 1-1] LiₓNiₐM1_{b1}M2_{b2}O_{2+z}

In Formula 1-1, M1 may include Co, Mn and/or Al. M2 may include the above-described auxiliary elements. In Formula 1-1, x, a, b1, b2 and z may satisfy 0.9≤x≤1.2, 0.6≤a≤0.99, 0.01≤b1+b2≤0.4, and -0.5≤z≤0.1.

The cathode active material 200 may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may be present on the surface of the lithium-nickel metal oxide particles, or may penetrate through the surface of the lithium-nickel metal oxide particles to be incorporated into the bonding structure represented by Formula 1 or Formula 1-1 above.

The cathode active material 200 may include a nickel-cobalt-manganese (NCM) lithium oxide. In this case, an NCM lithium oxide with an increased nickel content may be used as the lithium-metal oxide particle 210.

Nickel may serve as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

However, as the Ni content increases, the long-term storage stability and cycle life stability of the cathode or the secondary battery may be relatively reduced, and side reactions with the electrolyte may also increase. Nevertheless, according to exemplary embodiments, by including Co, the cycle life stability and capacity retention characteristics may be improved by Mn, while electrical conductivity is maintained.

The content of Ni (e.g., the molar fraction of nickel based on the total molar amount of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

According to exemplary embodiments, the lithium-metal oxide particle 210 may include a secondary particle formed by agglomeration of a plurality of primary particles.

For example, in the lithium-metal oxide particles, the "secondary particle" may refer to a particle in which a plurality of primary particles (e.g., more than 10, 20 or more, 30 or more, 40 or more, 50 or more, etc.) are assembled or agglomerated to form a substantially single particle.

For example, the secondary particle may refer to a particle in which a plurality of primary particles are agglomerated and are observed or regarded as substantially one particle. For example, in the case of the secondary particles, the boundaries of the primary particles may be observed in SEM cross-sectional images. For example, the secondary particle form may be distinguished from the single particle form, and in the case of the single particle, the boundaries of the primary particles may not be observed in SEM cross-sectional image.

For example, the secondary particle may be formed by agglomerating more than 10, 30 or more, 50 or more, or 100 or more primary particles.

According to exemplary embodiments, the primary particles may have a hexagonal close-packed structure. Accordingly, the particle diameter of the lithium-metal oxide particle 210 may be relatively reduced while including the same metal content, and a stable layered structure may be maintained. Accordingly, the stability of the secondary battery may be improved.

For example, the crystal structure of the primary particles may be confirmed through transmission electron microscope-selected area electron diffraction (TEM-SAED) analysis.

According to exemplary embodiments, the lithium-metal oxide particles 210 may have a median particle diameter (D50) of 3.0 µm to 20.0 µm. According to exemplary embodiments, the median particle diameter (D50) of the lithium-metal oxide particles 210 may be 3.0 µm to 15.0 µm, 3.5 µm to 13.0 µm, 3.8 µm to 12.0 µm, or 4.0 µm to 10.0 µm.

For example, the median particle diameter (D50) may be a volume-median particle diameter of the lithium-metal oxide particles 210, and may refer to the particle diameter measured using a particle size analyzer employing laser diffraction, corresponding to the particle diameter at a cumulative volume fraction of 50% when the particles in the measured distribution are accumulated from the smallest size.

According to exemplary embodiments, the coating part 250 may include the metal-containing part 220 including a metal element and the sulfur-containing part 230 including a sulfur element. In one embodiment, the coating part 250 may be substantially composed of the metal-containing part 220 and the sulfur-containing part 230.

According to exemplary embodiments, the coating part 250 may be formed between the primary particles and on the surface of the secondary particle.

According to exemplary embodiments, the content of the coating part 250 formed between the primary particles may be lower than that of the coating part 250 formed on the surface of the secondary particle. For example, the amount of the coating part 250 formed on the surface of the secondary particle may be 60% or more, 70% or more, or 80% or more based on the total weight of the coating part 250. Accordingly, exposure of the cathode active material to the electrolyte may be suppressed.

In some embodiments, the coating part 250 may include lithium, a metal, and sulfur. For example, the coating part 250 may include a compound in which two or more of lithium, a metal, and sulfur together form a crystal structure. For example, the coating part 250 may include a compound including Li₂SO₄ and a metal element.

In some embodiments, the metal of the coating part 250 may include at least one of Al, Ti, Zr, W, Sr, Ba, Ta, Nb, Mo, K, B and Na. For example, the metal element and a lithium-sulfur-containing compound may be present together in the coating part 250.

In some embodiments, the coating part 250 may include at least one of Li₂SO₄, Li(NH₄)SO₄, Li(N₂H₅)SO₄, LiNaSO₄, LiKSO₄, Li₂NaK(SO₄)₂ Li₂S₂O₆, Li₂Mg₂(SO₄)₃, LiB(SO4)2, LiB(S₂O₇)₂ and Li₅B(SO₄)₄.

In some embodiments, the compound included in the coating part 250 may have a monoclinic crystal structure. Accordingly, the specific surface area of the lithium-metal oxide particles may be reduced, and the surface of the primary particle and/or the surface of the secondary particle may be protected by the coating part 250, thereby improving the cycle life characteristics and operational stability of the secondary battery.

The coating part 250, which includes a compound having a monoclinic crystal structure, may diffuse lithium through a paddle-wheel mechanism. For example, the paddle-wheel mechanism may exhibit a phenomenon in which oxygen-containing elements rotate about sulfur ions, which form anions, to move lithium ions, thereby reducing the activation energy required for lithium ion migration.

For example, the crystal structure of the compound may be confirmed through the transmission electron microscope-selected area electron diffraction (TEM-SAED) analysis.

According to exemplary embodiments, a ratio of the respective areas of the metal-containing part 220 and the sulfur-containing part 230 in the coating part 250 may be controlled as described below.

For example, the metal-containing part 220 and the sulfur-containing part 230 may be formed by a semi-dry method in which preliminary lithium-metal oxide particles, a metal compound, and a sulfur compound are dry-mixed, followed by adding a solvent and drying the mixture. Structural damage or collapse of the particles may be suppressed by the semi-dry method, thereby controlling the areas of each of the designed metal-containing part 220 and the sulfur-containing part 230. In addition, the ratio of the respective areas of the metal-containing part 220 and the sulfur-containing part 230 may be controlled by adjusting the compositions and contents of the preliminary lithium-metal oxide particles, the metal compound, and the sulfur compound, as well as a mixing speed, a drying temperature, a drying time, and a non-washing treatment.

According to exemplary embodiments, the ratio of the areas of the metal-containing part 220 and the sulfur-containing part 230 may be measured from images obtained through backscattered electron analysis.

For example, the cathode active material 200 including the lithium-metal oxide particle 210 and the coating part 250 may be placed in an analysis container of a Scanning electron microscope (SEM), irradiated with an electron beam, and an analysis image may be extracted using an in-column detector (ICD). From the image, the areas of each of the lithium-metal oxide particle 210, the metal-containing part 220, and the sulfur-containing part 230 may be calculated using a program, thereby determining the ratio of the areas of the metal-containing part 220 and the sulfur-containing part 230. By analyzing low-loss backscattered electrons through the ICD, each material may be clearly classified.

According to exemplary embodiments, the areas of each of the lithium-metal oxide particle 210, the metal-containing part 220, and the sulfur-containing part 230 may each be an average of areas calculated from respective images obtained by performing backscattered electron analysis 5 or more times. For example, the areas of the metal-containing part 220 may be calculated from images obtained by repeating the backscattered electron analysis 5 or more times, 7 or more times, 10 or more times, or 20 or more times, and the average of the respective areas may correspond to the area of the metal-containing part 220.

According to exemplary embodiments, the relative standard deviation of the areas of each of the lithium-metal oxide particle 210, the metal-containing part 220, and the sulfur-containing part 230 may be 10% or less, 5% or less, or 3% or less. The relative standard deviation may be calculated using a known method and, for example, expressed as a percentage obtained by dividing the standard deviation by the corresponding average value. Within the above range, the measurement reliability of each area may be improved, thereby enhancing the stability of the cathode active material and the reproducibility of the secondary battery.

According to exemplary embodiments, the specific numerical values of the area ratio of the metal-containing part 220 and the sulfur-containing part 230 may be more clearly determined by controlling the irradiation conditions of the electron beam.

According to exemplary embodiments, an accelerating voltage of an electron beam irradiated during the backscattered electron analysis may be 1 kV to 10 kV, 2 kV to 8 kV, or 3 kV to 7 kV. Within this range, the energy of the reflected electrons may increase, thereby increasing the contrast among the lithium-metal oxide particle 210, the metal-containing part 220, and the sulfur-containing part 230. Accordingly, the numerical values of each area may be determined with improved accuracy.

According to exemplary embodiments, the current of the electron beam may be 0.1 nA to 10 nA, 0.2 nA to 5 nA, or 0.3 nA to 1.5 nA. Within this range, the boundaries may be more clearly distinguished among the lithium-metal oxide particle 210, the metal-containing part 220, and the sulfur-containing part 230, thereby improving the reliability of the area measurement value.

According to exemplary embodiments, a metal area ratio of the cathode active material 200 according to Equation 1 below may be 2% to 6%. In some embodiments, the metal area ratio may be 2.2% to 5.8%, 2.5% to 5.5%, 2.8% to 5.2%, or 3% to 5%.$Metal area ratio = \left(Metal-containing part area/Total area\right) \times 100$

In Equation 1, the total area is a total area of the lithium-metal oxide particles 210 and the coating part 250 measured from the image obtained by the above-described backscattered electron analysis.

The metal-containing part area is an area of the metal-containing part 220 measured from the image obtained by the above-described backscattered electron analysis.

The cycle life characteristics of a secondary battery including the cathode active material having a metal area ratio within the above range may be improved. For example, if the metal area ratio is less than the above range, the capacity retention may be reduced due to an increase in residual lithium. For example, if the metal area ratio exceeds the above range, the discharge capacity and capacity retention may be reduced due to an increase in resistance caused by the metal-containing part 220.

According to exemplary embodiments, the metal-containing part 220 may include a metal element. For example, the metal element may be present in a metallic crystal form and/or in a state bonded with the lithium-metal oxide particle 210 and the sulfur-containing part 230.

According to exemplary embodiments, the metal-containing part 220 may include at least one of Al, Ti, Zr, W, Sr, Ba, Ta, Nb, Mo, K, B and Na. In some embodiments, the metal-containing part 220 may include one or more of Al, B, W and Nb. In one embodiment, the metal-containing part 220 may include W. By controlling the area of the metal-containing part 220 including the metal, improved cycle life characteristics may be achieved.

For example, the metal-containing part 220 may be formed by a metal oxide. Examples of the metal oxides may include Al₂O₃, TiO₂, Ti₂O₃, ZrO₂, B₂O₃, H₃BO₃, SrO₂, SrAl₂O₄, SrTiO₃, SrWO₄, BaO, WO₃, (NH₄)₁₀H₂(W₂O₇)₆, MgO, Ta₂O₅, Nb₂O₅, MoO₃, H₄[W₁₂SiO₄₀], H₄SiO₄·12MoO₃, or (NH₄)₂MoO₄.

For example, the metal oxides may be mixed in an amount of 0.1 mol% to 1.0 mol% based on the total molar amount of the preliminary lithium-metal oxide particles. The metal area ratio may be adjusted within this range.

According to exemplary embodiments, the metal-containing part 220 may have an average thickness of 2 nm to 20 nm, 3 nm to 18 nm, 4 nm to 16 nm, or 5 nm to 15 nm.

According to exemplary embodiments, the metal-containing part 220 may be formed between the primary particles and on the surface of the secondary particle.

According to exemplary embodiments, the content of the metal-containing part 220 formed between the primary particles may be lower than that of the metal-containing part 220 formed on the surface of the secondary particle. For example, the content of the metal-containing part 220 formed on the surface of the secondary particle may be 60% or more, 70% or more, or 80% or more based on the total weight of the metal-containing part 220. Accordingly, residual lithium on the surface of the cathode active material 200 may be reduced.

According to exemplary embodiments, a sulfur area ratio of the cathode active material 200 according to Equation 2 below may be 5% to 20%. In some embodiments, the sulfurarea ratio may be 5.2% to 19.8%, 5.5% to 19.5%, 5.8% to 19.2%, 6% to 19%, or 6.5% to 18.5%.$Sulfur area ratio = \left(Sulfur-containing part area/Total area\right) \times 100$

In Equation 2, the total area is the total area of the lithium-metal oxide particle 210 and the coating part 250 measured from the image obtained by the above-described backscattered electron analysis.

The sulfur-containing part area is an area of the sulfur-containing part 230 measured from the image obtained by the above-described backscattered electron analysis.

A secondary battery including the cathode active material having a sulfur area ratio within the above range may maintain improved cycle life characteristics and may exhibit enhanced capacity characteristics. For example, if the sulfur area ratio is less than the above range, the high-temperature capacity retention may decrease due to an increase in residual lithium, and the discharge capacity may decrease due to an increase in resistance. For example, if the sulfur area ratio exceeds the above range, the increased reaction between the sulfur-containing part 230 and the lithium-metal oxide particle 210 may reduce lithium mobility, thereby degrading capacity characteristics.

According to exemplary embodiments, the sulfur-containing part 230 may include a sulfur element.

For example, the sulfur element may be present in the form of a lithium-sulfur compound. For example, the lithium-sulfur compound may include lithium sulfate (Li₂SO₄), lithium sulfate monohydrate (Li₂SO_{4·}H₂O), lithium ammonium sulfate (Li(NH₄)SO₄), lithium hydroxyl ammonium sulfate (Li(NH₃)(OH)SO₄), lithium fluorosulfate (LiSO₃F), lithium hydrogensulfate (LiHSO₄), or lithium sulfide (Li₂S).

For example, the sulfur-containing part 230 may be formed by a sulfur compound. The sulfur compound may include a sulfonyl compound, and may include, for example, (NH₄)₂SO₄, HSO₃NH₂, NH₄SO₃NH₂, Al₂(SO₄)₃, AlK(SO₄)₂, Al(NH₄)(SO₄)₂, Ti(SO₄)₂, TiOSO₄, or SrSO₄.

For example, the sulfur compound may be mixed in an amount of 0.5 wt% to 2.5 wt% based on the total weight of the preliminary lithium-metal oxide particles. The sulfur area ratio may be adjusted within this range.

According to exemplary embodiments, the sulfur-containing part 230 may have an average thickness value of 2 nm to 20 nm, 3 nm to 18 nm, 4 nm to 16 nm, or 5 nm to 15 nm.

For example, the thickness values of the metal-containing part 220 and the sulfur-containing part 230 may represent values calculated from images obtained through the above-described backscattered electron analyses. For example, the electron beam output may be increased to extract an elemental distribution image along a thickness direction, and the thickness values and their averages may be calculated from the elemental distribution along the thickness direction calculated from the image.

For example, the thickness may represent a value measured in a direction from a surface toward a center of the cathode active material 200.

According to exemplary embodiments, the sulfur-containing part 230 may be formed between the primary particles and on the surface of the secondary particle.

According to exemplary embodiments, the content of the sulfur-containing part 230 formed between the primary particles may be lower than that of the sulfur-containing part 230 formed on the surface of the secondary particle. For example, the content of the sulfur-containing part 230 formed on the surface of the secondary particle may be 60% or more, 70% or more, or 80% or more based on the total weight of the sulfur-containing part 230. Accordingly, residual lithium on the surface of the cathode active material 200 may be further reduced.

In some embodiments, the cathode active material 200 may further include a lithium compound formed on the lithium-metal oxide particle 210.

For example, the lithium compound may be present as a lithium impurity, such as lithium carbonate (Li₂CO₃).

In some embodiments, the content of the lithium compound may be 1,000 ppm to 5,500 ppm, 1,500 ppm to 5,100 ppm, or 2,000 ppm to 4,800 ppm based on the total weight of the cathode active material 200. Accordingly, the lithium ion mobility may be increased, thereby facilitating lithium ion transport and improving the capacity and output characteristics of the secondary battery.

According to exemplary embodiments, the cathode active material 200 may be prepared by a semi-dry method. For example, the cathode active material 200 may be prepared by dry mixing preliminary lithium-metal oxide particles, a metal compound, and a sulfur compound, followed by adding a solvent, drying, and then calcining. Accordingly, the reproducibility and reliability of the metal area ratio and the sulfur area ratio may be improved.

For example, preliminary lithium-metal oxide particles may be prepared through a reaction between a transition metal precursor containing nickel and a lithium precursor. The transition metal precursor (e.g., a Ni-Co-Mn precursor) may be prepared through a co-precipitation reaction. For example, the transition metal precursor may be prepared through co-precipitation of metal salts. The metal salts may include nickel salts, manganese salts, and/or cobalt salts.

For example, a precipitating agent may be additionally added to the co-precipitation reaction, and the precipitating agent may include an alkaline compound such as sodium hydroxide (NaOH) or sodium carbonate (Na₂CO₃). The chelating agent may include ammonium hydroxide (e.g., NH_{3·}H₂O), ammonium carbonate (e.g., (NH₄)₂CO₃), or the like.

For example, the co-precipitation reaction may be performed at a temperature of about 40°C to 60°C for about 24 to 72 hours.

The lithium precursor compound may include, for example, lithium carbonate, lithium nitrate, lithium acetate, lithium oxide, or lithium hydroxide. These may be used alone or in a combination of two or more thereof.

For example, the metal oxide may be provided as a metal source for the metal-containing part 220, and the sulfur compound may be provided as a sulfur source for the sulfur-containing part 230.

**For** example, introduction and drying of the solvent may be performed simultaneously. For example, the solvent may be introduced into a dryer and vacuum-dried to form the coating part 250. For example, introduction of the solvent may be performed by pouring, dropping, spraying, mist spraying, or the like. For example, introduction and drying of the solvent may be performed in a helical-type conical dryer, a shovel-type conical dryer, a helical-type cylindrical dryer, or the like. For example, the solvent may be pure water or ultrapure water.

For example, stirring may be performed simultaneously with the drying. For example, during drying, the mixture resulting from dry mixing of the preliminary lithium-metal oxide particles, the metal oxide, and the sulfur compound together with the solvent may be stirred at a low speed (e.g., 100 rpm or less).

**For** example, a water-washing treatment in which water is added in an amount substantially equal to or similar to that of the preliminary lithium-metal oxide particles may not be performed. Accordingly, damage to or collapse of the layered structure of the primary particles may be prevented.

For example, the mixture may be pulverized after drying and before calcining. For example, the pulverization may be performed using a high-speed mixer, an air classifier mill (ACM), or a disc mill.

For example, the mixture after the introduction and drying of the solvent may be calcined at a temperature higher than the temperature used during the drying. Accordingly, the cathode active material 200 including the coating part 250 formed on the lithium-metal oxide particle 210 may be prepared.

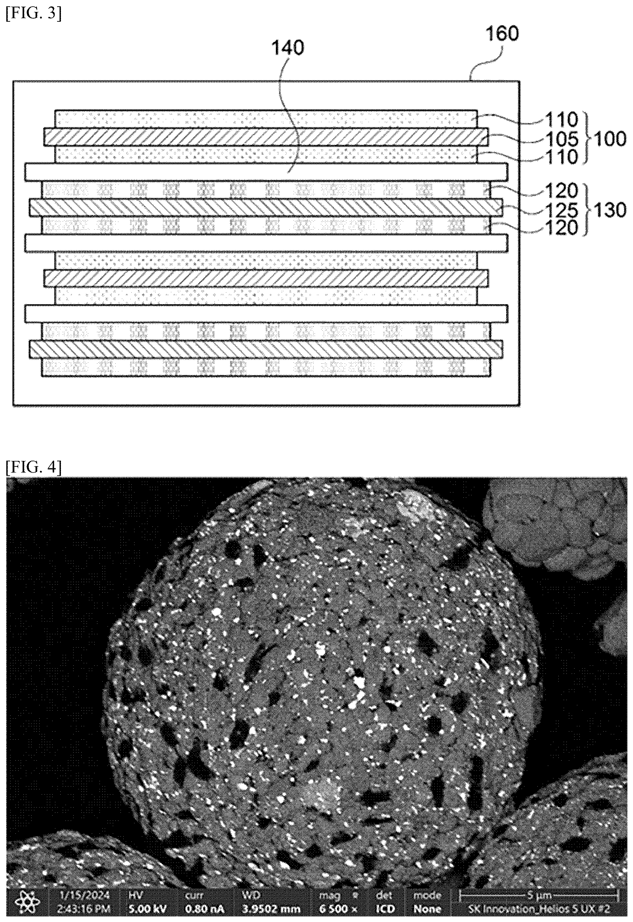

FIGS. 2 and 3 are schematic plan and cross-sectional views illustrating a lithium secondary battery according to exemplary embodiments, respectively. For example, FIG. 3 is a cross-sectional view taken along the line I-I' of FIG. 2 in the thickness direction.

Referring to FIGS. 2 and 3, the lithium secondary battery may include a cathode 100 including the above-described cathode active material and an anode 130 disposed opposite the cathode 100.

The cathode 100 may include a cathode active material layer 110 formed by applying the cathode active material to at least one surface of a cathode current collector 105.

The cathode current collector 105 may include stainless steel, nickel, aluminum, titanium, or an alloy thereof. The cathode current collector 105 may also include aluminum or stainless steel whose surface is treated with carbon, nickel, titanium or silver. For example, the cathode current collector 105 may have a thickness of 10 µm to 50 µm.

The cathode active material layer 110 may include the above-described cathode active material.

The cathode active material may include a plurality of the lithium-metal oxide particles. For example, the total content of the lithium-metal oxide particles based on the total weight of the cathode active material may be 50 wt% or more. In some embodiments, the total content of the lithium-metal oxide particles based on the total weight of the cathode active material may be 60 wt% or more, 70 wt% or more, 80 wt% or more, or 90 wt% or more.

The cathode active material may be mixed in a solvent to prepare a cathode slurry. The cathode slurry may be coated onto at least one surface of the cathode current collector 105, then dried and roll-pressed to prepare the cathode active material layer 110. The coating may include processes such as gravure coating, slot die coating, simultaneous multilayer die coating, imprinting, doctor blade coating, dip coating, bar coating or casting, etc. The cathode active material layer 110 may further include a binder, and optionally may further include a conductive material, a thickener or the like.

As the solvent, N-methyl-2-pyrrolidone (NMP), dimethylformamide, dimethylacetamide, N,N-dimethylaminopropylamine, ethylene oxide, tetrahydrofuran, and the like may be used.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In one embodiment, a PVDF-based binder may be used as the cathode binder. In this case, the amount of binder for forming the cathode active material layer 110 may be decreased and the amount of the cathode active material may be relatively increased. Accordingly, the output characteristics and capacity characteristics of the secondary battery may be improved.

The conductive material may be added to the cathode active material layer 110 in order to enhance the conductivity thereof and/or the mobility of lithium ions or electrons. For example, the conductive material may include carbon-based conductive materials such as graphite, carbon black (e.g., Denka Black), acetylene black, Ketjen black, graphene, vapor-grown carbon fibers (VGCF), carbon nanotubes (CNTs), or carbon fibers; and/or metal-based conductive materials such as tin, tin oxide, and titanium oxide; as well as perovskite materials such as LaSrCoO₃, and LaSrMnO₃. These may be used alone or in combination of two or more thereof.

The cathode slurry may further include a thickener and/or a dispersant. In one embodiment, the cathode slurry may include a thickener such as carboxymethyl cellulose (CMC).

The anode 130 may include an anode current collector 125, and an anode active material layer 120 formed on at least one surface of the anode current collector 125.

For example, the anode current collector 125 may include a copper foil, nickel foil, stainless steel foil, titanium foil, nickel foam, copper foam, or a polymer substrate coated with a conductive metal. These may be used alone or in combination of two or more thereof. For example, the anode current collector 125 may have a thickness of 10 µm to 50 µm.

The anode active material layer 120 may include an anode active material. As the anode active material, a material capable of adsorbing and desorbing lithium ions may be used. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material, etc. may also be used. These may be used alone or in combination of two or more thereof.

The amorphous carbon may include hard carbon, soft carbon, coke, mesocarbon microbead (MCMB), mesophase pitch-based carbon fiber (MPCF) or the like.

The crystalline carbon may include graphite-based carbon such as natural graphite, artificial graphite, graphitized coke, graphitized MCMB, graphitized MPCF or the like.

The lithium metal may include pure lithium metal and/or lithium metal having a protective layer formed thereon for suppressing dendrite growth and the like. In one embodiment, a lithium metal-containing layer deposited or coated on the anode current collector 125 may be used as the anode active material layer 120. In one embodiment, a lithium thin-film layer may also be used as the anode active material layer 120.

Elements contained in the lithium alloy may include aluminum, zinc, bismuth, cadmium, antimony, silicon, lead, tin, gallium, indium, etc. These may be used alone or in combination of two or more thereof.

The silicon-containing material may provide further increased capacity characteristics. The silicon-containing material may include Si, SiOₓ (0<x<2), metal-doped SiOₓ (0<x<2), a silicon-carbon composite, etc.

The metal may include lithium and/or magnesium, and the metal-doped SiOₓ (0<x<2) may include a metal silicate.

The anode active material may be mixed in a solvent to prepare an anode slurry. The anode slurry may be coated or deposited on the anode current collector 125, and then dried and roll-pressed to prepare the anode active material layer 120. The coating may include processes such as gravure coating, slot die coating, simultaneous multilayer die coating, imprinting, doctor blade coating, dip coating, bar coating or casting, or the like. The anode active material layer 120 may further include a binder, and optionally may further include a conductive material, a thickener or the like.

The solvent contained in the anode slurry may include water, purified water, deionized water, distilled water, ethanol, isopropanol, methanol, acetone, n-propanol, t-butanol and the like. These may be used alone or in combination of two or more thereof.

The above-described materials that can be used when preparing the cathode 100 as the binder, conductive material and thickener may also be used for the anode.

In some embodiments, a styrene-butadiene rubber (SBR)-based binder, carboxymethyl cellulose (CMC), polyacrylic acid-based binder, poly(3,4-ethylenedioxythiophene) (PEDOT)-based binder, and the like may be used as an anode binder. These may be used alone or in combination of two or more thereof.

In exemplary embodiments, a separator 140 may be interposed between the cathode 100 and the anode 130. The separator 140 may be configured to prevent an electrical short-circuit between the cathode 100 and the anode 130, and to allow the flow of ions. For example, the separator may have a thickness of 10 µm to 20 µm.

For example, the separator 140 may include a porous polymer film or a porous nonwoven fabric.

The porous polymer film may include a polyolefin-based polymer such as an ethylene polymer, propylene polymer, ethylene/butene copolymer, ethylene/hexene copolymer, or ethylene/methacrylate copolymer, etc. These may be used alone or in combination of two or more thereof.

The porous nonwoven fabric may include glass fibers having a high melting point, polyethylene terephthalate fibers, etc.

The separator 140 may also include a ceramic-based material. For example, inorganic particles may be coated on the polymer film or dispersed within the polymer film to improve heat resistance.

The separator 140 may have a single-layer or multilayer structure including the above-described polymer film and/or non-woven fabric.

According to exemplary embodiments, an electrode cell may be defined by the cathode 100, the anode 130 and the separator 140, and a plurality of electrode cells may be stacked to form, for example, a jelly roll type electrode assembly 150. For example, the electrode assembly 150 may be formed by winding, stacking, z-folding, or stack-folding the separator 140.

The electrode assembly 150 may be accommodated in a case 160 together with the electrolyte to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

The organic solvent may include, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, γ-butyrolactone, propylene sulfite and the like. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluorophosphate, etc.

The borate compound may include lithium bis(oxalate) borate, etc.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode 100 and the anode 130 in place of the above-described separator 140.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These may be used alone or in combination of two or more thereof.

In one embodiment, the solid electrolyte may include an oxide-based amorphous solid electrolyte, such as, for example, Li₂O-B₂O₃-P₂O₅, Li₂O-SiO₂, Li₂O-B₂O₃, Li₂O-B₂O₃-ZnO, etc.

As shown in FIGS. 2 and 3, electrode tabs (cathode tabs and anode tabs) may protrude from the cathode current collector 105 and the anode current collector 125, respectively, which belong to respective electrode cells, and may extend to one side of the case 160. The electrode tabs may be welded together with the one side of the case 160 to form electrode leads (a cathode lead 107 and an anode lead 127) that extend or are exposed to the outside of the case 160.

The lithium secondary battery may be manufactured, for example, in a cylindrical, prismatic, pouch, or coin type using a can.

The invention relates also to the following numbered aspects:
Aspect 1. A cathode active material for a lithium secondary battery comprising:
   a lithium-metal oxide particle; and
   a coating part formed on the lithium-metal oxide particle and comprising a metal-containing part and a sulfur-containing part,
   wherein a metal area ratio of the cathode active material according to Equation 1 below is 2% to 6%:

      $Metal area ratio = \left(Metal-containing part area/Total area\right) \times 100$
      (in Equation 1, the total area is a total area of the lithium-metal oxide particles and the coating part measured from the image obtained by the backscattered electron analysis, and the metal-containing part area is an area of the metal-containing part measured from the image obtained by the backscattered electron analysis).
Aspect 2. The cathode active material for a lithium secondary battery according to aspect 1, wherein a sulfur area ratio of the cathode active material according to Equation 2 below is 5% to 20%:

   $Sulfur area ratio = \left(Sulfur-containing part area/Total area\right) \times 100$
   (in Equation 2, the total area is the total area of the lithium-metal oxide particles and the coating part measured from the image obtained by the backscattered electron analysis, and the sulfur-containing part area is an area of the sulfur-containing part measured from the image obtained by the backscattered electron analysis).
Aspect 3. The cathode active material for a lithium secondary battery according to aspect 1 or 2, wherein the total area, the metal-containing part area, and the sulfur-containing part area are each an average of the total areas, the metal-containing part areas, and the sulfur-containing part areas measured from respective images obtained by repeating the backscattered electron analysis 5 or more times.
Aspect 4. The cathode active material for a lithium secondary battery according to any one of aspects 1 to 3, wherein an accelerating voltage of an electron beam irradiated during the backscattered electron analysis is 2 kV to 8 kV.
Aspect 5. The cathode active material for a lithium secondary battery according to any one of aspects 1 to 4, wherein the metal-containing part includes at least one of Al, Ti, Zr, W, Sr, Ba, Ta, Nb, Mo, K, B and Na.
Aspect 6. The cathode active material for a lithium secondary battery according to any one of aspects 1 to 5, wherein the lithium-metal oxide particles have a median particle diameter (D50) of 3.0 µm to 20.0 µm.
Aspect 7. The cathode active material for a lithium secondary battery according to any one of aspects 1 to 6, wherein the lithium-metal oxide particle includes a secondary particle formed by agglomeration of a plurality of primary particles.
Aspect 8. The cathode active material for a lithium secondary battery according to aspect 7, wherein the coating part is formed between the primary particles and on a surface of the secondary particle.
Aspect 9. The cathode active material for a lithium secondary battery according to aspect 8, wherein the content of the metal-containing part formed between the primary particles is less than a content of the metal-containing part formed on the surface of the secondary particle.
Aspect 10. The cathode active material for a lithium secondary battery according to aspect 8 or 9, wherein the content of the sulfur-containing part formed between the primary particles is less than a content of the sulfur-containing part formed on the surface of the secondary particle.
Aspect 11. The cathode active material for a lithium secondary battery according to any one of aspects 1 to 10, further comprising a lithium compound formed on the lithium-metal oxide particle, wherein the content of the lithium compound based on the total weight of the cathode active material is 1,000 ppm to 5,500 ppm.
Aspect 12. A lithium secondary battery comprising:
   a cathode comprising the cathode active material for a lithium secondary battery according to any one of aspects 1 to 11; and
   an anode disposed opposite the cathode.

### Example 1

### (1) Preparation of Cathode Active Material

### 1) Preparation of Preliminary Lithium-Metal Oxide Particles

NiSO₄, CoSO₄, and MnSO₄ were introduced and mixed at a molar ratio of 88:9:3 in distilled water from which dissolved oxygen had been removed by bubbling N₂ for 24 hours, to prepare a mixed solution. The mixed solution was introduced into a reactor at 55 °C, and NaOH and NH₃H₂O were added as a precipitant and as a chelating agent, respectively. A co-precipitation reaction was performed for 48 hours to obtain Ni_{0.88}Co_{0.09}Mn_{0.03}(OH)₂ as a transition metal precursor. The obtained transition metal precursor was first dried at 80 °C for 10 hours and then secondary dried at 120 °C for 10 hours.

Lithium hydroxide and the transition metal precursor were added to a dry high-speed mixer at a ratio of 1.01:1 and uniformly mixed for 5 minutes. The mixture was introduced into a calcination furnace, heated to 700 °C at a heating rate of 2 °C/min, and maintained at 700 °C for 10 hours. Oxygen was continuously supplied at a flow rate of 20 L/min during the heating and calcination. After completion of the calcination, the mixture was naturally cooled to room temperature, then pulverized and classified to obtain preliminary lithium-metal oxide particles in the form of secondary particles (median particle diameter (D50): 10 µm) having a composition of LiNi_{0.88}Co_{0.09}Mn_{0.03}O₂.

### 2) Dry Mixing

The preliminary lithium-metal oxide particles, WO₃ powder as a metal compound, and (NH₄)₂SO₄ powder as a sulfur compound were dry mixed to form a mixture.

The content of the metal compound was adjusted to 0.20 mol% based on the total molar amount of the preliminary lithium-metal oxide particles, and the content of the sulfur compound was adjusted to 1.2 wt% based on the total weight of the preliminary lithium-metal oxide particles.

### 3) Solvent Introduction and Drying

The mixture formed by dry mixing was introduced into a conical dryer (OKAWARA MFG Co., Ltd., model RM-25VD-SR). Pure water in an amount of 5 wt% based on the total weight of the mixture was introduced in a mist form into the dryer and vacuum-dried, to prepare a preliminary cathode active material including tungsten and sulfur. The internal temperature (drying temperature) of the dryer was adjusted to 170 °C. The internal temperature of the dryer was measured using a thermometer installed inside the dryer. During vacuum drying, the mixture was stirred at a low speed of 100 rpm or less.

The vacuum drying was performed under the following conditions.
Heat source set temperature: 200 °C
Dryer internal temperature: 170 °C
Drying time: 6 hours
Reactor size: 25 L
Amount of mixture introduced: 30 kg
Stirring speed: 80 rpm
Solvent introduction rate: 0.5 L/min
Solvent temperature: 25 °C to 45 °C

### 4) Preparation of Cathode Active Material

The preliminary cathode active material was introduced into a high-speed mixer (Nippon Coke & Engineering Co., Ltd., model FM20C/I) and pulverized. The material was then introduced into a calcination furnace and heated to 400 °C at a heating rate of 2 °C/min while supplying oxygen at a flow rate of 20 L/min. The temperature was then maintained at 400 °C for 10 hours. The calcined product was classified using a 325-mesh sieve to prepare a cathode active material including lithium-metal oxide particles and a coating part formed on a surface of the lithium-metal oxide particles and including a metal-containing part and a sulfur-containing part.

The pulverization was performed under the following conditions.
Mixer reactor size: 20 L
Amount of preliminary lithium-metal oxide particles introduced: 15 kg
Mixer reactor temperature: maintained at room temperature using cooling water
Blade: standard-type blade (lower), grinding-type blade (upper)
Pulverization speed and time: 700 rpm, 20 min

### (2) Area Analysis of Cathode Active Material Particles

The lithium-metal oxide particles (D50: 10 µm) were imaged by backscattered electron (BSE) analysis, and the areas of the lithium-metal oxide particles, the metal-containing part, and the sulfur-containing part were calculated.

Specifically, the cathode active material was firmly attached to carbon tape and then sufficiently blown with an air gun. The carbon tape was mounted on a scanning electron microscope (Helios UX, Thermo Fisher Scientific) and irradiated with an electron beam. Thereafter, the working distance (WD) of the cathode active material was set to 4 mm, and the focus, stigmator, and alignment were adjusted. Particles having a size similar to the D50 were selected, the mode was changed to an ultra-high-resolution (UHR) mode, and the detector type was changed to an in-column detector (ICD). Images were extracted at a magnification of 15,000×.

The backscattered electron analysis was performed under the following conditions:
Temperature and humidity: 20±5°C, 65% or less
Accelerating voltage: 5 kV
Beam current: 0.8 nA
Detector: in-column detector (ICD)
Use case: standard

The backscattered electron analysis was performed at least five times to obtain a plurality of images, and from the plurality of images, the total area of the lithium-metal oxide particles, the area of the metal-containing part, and the area of the sulfur-containing part were measured using the ImageJ program.

The metal area ratio and sulfur area ratio were calculated according to Equation 1 and Equation 2 below, respectively.$Metal area ratio = \left(Metal-containing part area/Total area\right) \times 100$

In Equation 1, the total area is a total area of the lithium-metal oxide particles and the coating part measured from the image obtained by the backscattered electron analysis, and the metal-containing part area is an area of the metal-containing part measured from the image obtained by the backscattered electron analysis.$Sulfur area ratio = \left(Sulfur-containing part area/Total area\right) \times 100$

In Equation 2, the total area is the total area of the lithium-metal oxide particles and the coating part measured from the image obtained by the backscattered electron analysis, and the sulfur-containing part area is an area of the sulfur-containing part measured from the image obtained by the backscattered electron analysis.

FIGS. 4, 5, and 6A to 6C are images illustrating the results of the backscattered electron analysis of the cathode active material.

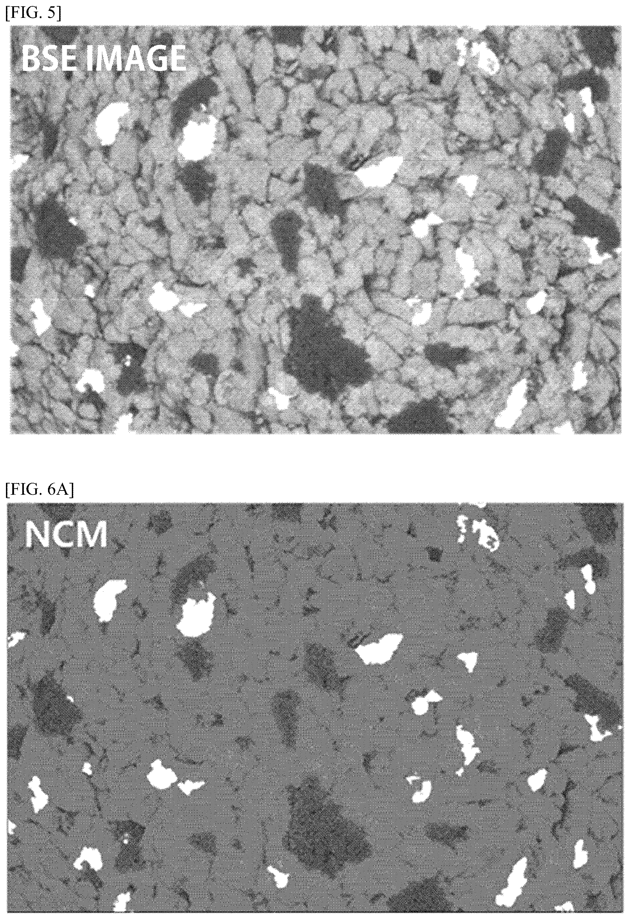

FIGS. 4 and 5 are images illustrating the results of the backscattered electron analysis of the cathode active material according to Example 1.

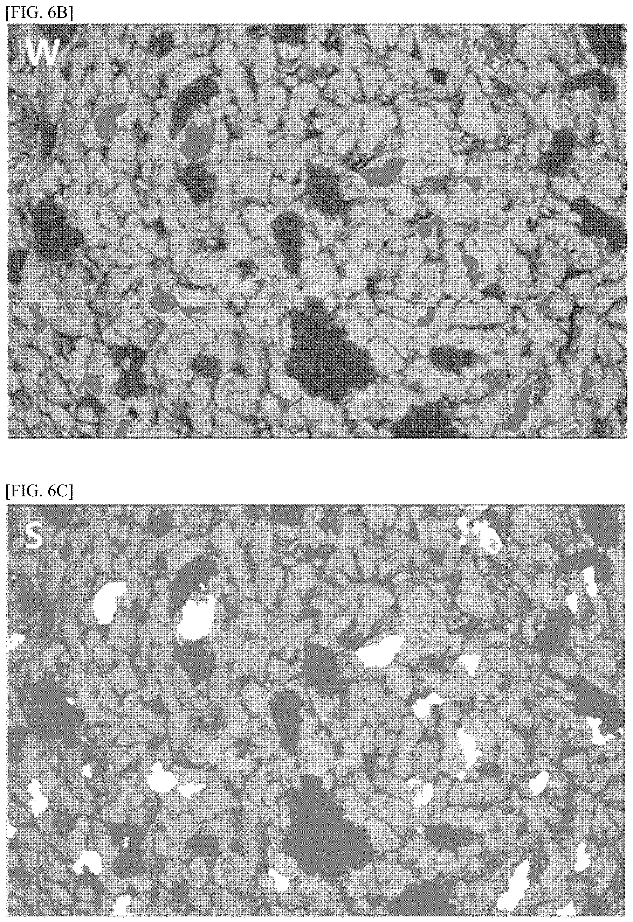

FIGS. 6A to 6C are images illustrating the area of the lithium-metal oxide particles, the area of the metal-containing part, and the area of the sulfur-containing part, respectively, among the results of the backscattered electron analysis of the cathode active material according to Example 1.

### Examples 2 to 26 and Comparative Examples 1 to 6

Cathode active materials were prepared in the same manner as in Example 1, except that the sulfur area ratio and the metal area ratio formed on the cathode active material were varied by changing the metal compound content, sulfur compound content, amount of pure water introduced, drying temperature, and/or the calcination temperature, as shown in Table 1.

**[TABLE 1]**

| Classification | Metal area ratio (%) | Sulfur area ratio (%) |
|---|---|---|
| Example 1 | 2 | 5 |
| Example 2 | 2 | 12 |
| Example 3 | 2 | 15 |
| Example 4 | 2 | 20 |
| Example 5 | 3 | 5 |
| Example 6 | 3 | 11 |
| Example 7 | 3 | 17 |
| Example 8 | 3 | 20 |
| Example 9 | 4 | 5 |
| Example 10 | 4 | 8 |
| Example 11 | 4 | 12 |
| Example 12 | 4 | 20 |
| Example 13 | 5 | 5 |
| Example 14 | 5 | 11 |
| Example 15 | 5 | 18 |
| Example 16 | 5 | 20 |
| Example 17 | 6 | 5 |
| Example 18 | 6 | 12 |
| Example 19 | 6 | 18 |
| Example 20 | 6 | 20 |
| Example 21 | 2 | 2 |
| Example 22 | 5 | 3 |
| Example 23 | 6 | 4 |
| Example 24 | 2 | 22 |
| Example 25 | 2 | 24 |
| Example 26 | 6 | 21 |
| Comparative Example 1 | 1 | 4 |
| Comparative Example 2 | 1 | 5 |
| Comparative Example 3 | 1 | 20 |
| Comparative Example 4 | 7 | 21 |
| Comparative Example 5 | 7 | 6 |
| Comparative Example 6 | 9 | 18 |

### Experimental Example

### Manufacture of Lithium Half-Battery

The cathode active material, Denka Black as a conductive agent, and polyvinylidene fluoride (PVDF) as a binder were mixed at a mass ratio of 93:5:2 to prepare a cathode slurry. The cathode slurry was applied onto an aluminum current collector, and then dried and roll-pressed to fabricate a cathode. After roll-pressing, the density of the cathode was adjusted to 3.3 g/cm³.

An anode was fabricated using lithium metal.

The cathode and anode were each notched into circular shapes having diameters of Φ14 and Φ16, respectively, and stacked with a separator (polyethylene, thickness: 13 µm) notched into Φ19 interposed between the cathode and the anode to form an electrode cell. ΦN (N is a positive number) may denote a circular shape having a diameter of N mm.

The electrode cell was placed in a coin cell outer case of standard (CR2032) having a diameter of 20 mm and a height of 3.2 mm, followed by electrolyte injection and assembly. Thereafter, aging was carried out for 12 hours or more to allow the electrolyte to be impregnated into the electrode.

A 1 M LiPF₆ solution prepared using a mixed solvent of EC/EMC (30/70; volume ratio) was used as the electrolyte. Formation charging and discharging were performed on the secondary battery manufactured as described above (charging conditions: CC-CV 0.1C, 4.3 V, 0.005C cut-off; discharging conditions: CC 0.1C, 3.0 V cut-off).

### (1) Measurement of Residual Lithium Content

The Li₂CO₃ content was calculated by taking into account the atomic weights of Li, C, and O, as well as the carbon (C) content obtained using a carbon/sulfur analyzer (CS844, LECO). A cathode active material was prepared in the same manner as in Example 1, except that sulfur compounds and metal compounds were not included. The C content obtained through CS analysis of the cathode active material was compared with the Li₂CO₃ content obtained through the conventional HCl titration method (Warder Method), and it was confirmed that the values were consistent.

### (2) Measurement of Initial Discharge Capacity

The lithium half-cells manufactured according to the above-described examples and comparative examples were charged in a chamber at 25 °C (CC-CV 0.1C 4.3 V 0.005C cut-off), and then discharged (CC 0.1C 3.0 V cut-off), and the battery capacity (initial discharge capacity) was measured.

### (3) Evaluation of Capacity Retention

The lithium secondary batteries according to the examples and comparative examples were placed in a chamber maintained at 41 °C and charged (CC-CV 0.66C, 4.2 V, 0.1C cut-off) and discharged (CC 0.66C, 2.5 V cut-off) to measure the discharge capacity.

The SOC was set to 97% at a specific cut-off voltage based on the measured discharge capacity (cut-off current: 0.1C). The cut-off voltage was specified in a range of 4.155 V to 4.175 V.

The lithium secondary batteries were charged (CC-CV 0.66C, 4.155 V to 4.175 V, 0.1C cut-off) and discharged (CC 0.66C, 2.5 V cut-off) 300 cycles. The high-temperature capacity retention was evaluated by dividing the discharge capacity at the 300th cycle by the discharge capacity at the first cycle and multiplying the result by 100.

**[TABLE 2]**

| Classification | Residual lithium (ppm) | Initial discharge capacity (mAh/g) | Capacity retention (%) |
|---|---|---|---|
| Example 1 | 5207 | 213 | 83 |
| Example 2 | 4465 | 212 | 83 |
| Example 3 | 4101 | 216 | 84 |
| Example 4 | 3948 | 216 | 84 |
| Example 5 | 5057 | 213 | 84 |
| Example 6 | 4547 | 213 | 85 |
| Example 7 | 3688 | 215 | 86 |
| Example 8 | 3552 | 217 | 84 |
| Example 9 | 4549 | 212 | 84 |
| Example 10 | 4012 | 213 | 86 |
| Example 11 | 3559 | 215 | 86 |
| Example 12 | 3018 | 216 | 85 |
| Example 13 | 4201 | 212 | 84 |
| Example 14 | 3648 | 211 | 84 |
| Example 15 | 2988 | 214 | 84 |
| Example 16 | 2829 | 215 | 85 |
| Example 17 | 4112 | 211 | 83 |
| Example 18 | 3207 | 212 | 83 |
| Example 19 | 2984 | 212 | 84 |
| Example 20 | 2685 | 214 | 84 |
| Example 21 | 6930 | 207 | 81 |
| Example 22 | 6289 | 209 | 82 |
| Example 23 | 5856 | 209 | 81 |
| Example 24 | 3532 | 207 | 76 |
| Example 25 | 3248 | 206 | 77 |
| Example 26 | 2918 | 209 | 79 |
| Comparative Example 1 | 7204 | 211 | 78 |
| Comparative Example 2 | 5691 | 214 | 79 |
| Comparative Example 3 | 4248 | 215 | 81 |
| Comparative Example 4 | 3876 | 208 | 75 |
| Comparative Example 5 | 4975 | 208 | 81 |
| Comparative Example 6 | 3903 | 206 | 80 |

Referring to Table 2, a low residual lithium content was confirmed in the cathode active materials according to the examples. In addition, a high initial discharge efficiency and high capacity retention were confirmed for secondary batteries including the cathode active materials according to the examples.

In contrast, the initial discharge capacity and capacity retention of secondary batteries including cathode active materials according to the comparative examples were degraded.

In Examples 21 to 23, having a relatively low sulfur area ratio, residual lithium was relatively increased, and the initial discharge efficiency and capacity retention were relatively decreased.

**In** Examples 24 to 26, having a relatively high sulfur area ratio, the initial discharge efficiency and capacity retention were relatively decreased.

### [Description of Reference Numerals]

- 100:: Cathode
- 105:: Cathode current collector
- 107:: Cathode lead
- 110:: Cathode active material layer
- 120:: Anode active material layer
- 125:: Anode current collector
- 127:: Anode lead
- 130:: Anode
- 140:: Separator
- 150:: Electrode assembly
- 160:: Case
- 200:: Cathode active material
- 210:: Lithium-metal oxide particles
- 220:: Metal-containing part
- 230:: Sulfur-containing part
- 250:: Coating part

## Claims

1. A cathode active material for a lithium secondary battery comprising:
a lithium-metal oxide particle; and
a coating part formed on the lithium-metal oxide particle and comprising a metal-containing part and a sulfur-containing part,
wherein a metal area ratio of the cathode active material according to Equation 1 below is 2% to 6%: $Metal area ratio = \left(Metal-containing part area/Total area\right) \times 100$
(in Equation 1, the total area is a total area of the lithium-metal oxide particles and the coating part measured from the image obtained by the backscattered electron analysis, and the metal-containing part area is an area of the metal-containing part measured from the image obtained by the backscattered electron analysis).

2. The cathode active material for a lithium secondary battery according to claim 1, wherein a sulfur area ratio of the cathode active material according to Equation 2 below is 5% to 20%: $Sulfur area ratio = \left(Sulfur-containing part area/Total area\right) \times 100$ (in Equation 2, the total area is the total area of the lithium-metal oxide particles and the coating part measured from the image obtained by the backscattered electron analysis, and the sulfur-containing part area is an area of the sulfur-containing part measured from the image obtained by the backscattered electron analysis).

3. The cathode active material for a lithium secondary battery according to claim 1 or 2, wherein the total area, the metal-containing part area, and the sulfur-containing part area are each an average of the total areas, the metal-containing part areas, and the sulfur-containing part areas measured from respective images obtained by repeating the backscattered electron analysis 5 or more times.

4. The cathode active material for a lithium secondary battery according to any one of claims 1 to 3, wherein an accelerating voltage of an electron beam irradiated during the backscattered electron analysis is 2 kV to 8 kV.

5. The cathode active material for a lithium secondary battery according to any one of claims 1 to 4, wherein the metal-containing part includes at least one of Al, Ti, Zr, W, Sr, Ba, Ta, Nb, Mo, K, B and Na.

6. The cathode active material for a lithium secondary battery according to any one of claims 1 to 5, wherein the lithium-metal oxide particles have a median particle diameter (D50) of 3.0 µm to 20.0 µm.

7. The cathode active material for a lithium secondary battery according to any one of claims 1 to 6, wherein the lithium-metal oxide particle includes a secondary particle formed by agglomeration of a plurality of primary particles.

8. The cathode active material for a lithium secondary battery according to claim 7, wherein the coating part is formed between the primary particles and on a surface of the secondary particle.

9. The cathode active material for a lithium secondary battery according to claim 8, wherein the content of the metal-containing part formed between the primary particles is less than a content of the metal-containing part formed on the surface of the secondary particle.

10. The cathode active material for a lithium secondary battery according to claim 8 or 9, wherein the content of the sulfur-containing part formed between the primary particles is less than a content of the sulfur-containing part formed on the surface of the secondary particle.

11. The cathode active material for a lithium secondary battery according to any one of claims 1 to 10, further comprising a lithium compound formed on the lithium-metal oxide particle, wherein the content of the lithium compound based on the total weight of the cathode active material is 1,000 ppm to 5,500 ppm.

12. A lithium secondary battery comprising:
a cathode comprising the cathode active material for a lithium secondary battery according to any one of claims 1 to 11; and
an anode disposed opposite the cathode.
